# EUROPÄISCHE PATENTSCHRIFT

(11) **EP 2 871 473 B1**
(45) Veröffentlichungstag und Bekanntmachung des Hinweises auf die Patenterteilung: **08.07.2020**
(21) Anmeldenummer: 14185687.2
(22) Anmeldetag: 22.09.2014
(51) Int. Cl.: G01N 27/62, G01N 30/68, F23D 14/46, F23N 5/12

(54) **Ionisationssensor**
Ionisation sensor
Capteur d'ionisation

(30) Priorität: 07.11.2013 DE 102013222675
(43) Veröffentlichungstag der Anmeldung: 13.05.2015
(73) Patentinhaber: Robert Bosch GmbH, 70442 Stuttgart (DE)
(72) Erfinder: Simoes, Mauro, 3770-059 Num 10 B 3 DTO (PT); Marques, Marco, 3810-474 Aveira (PT); Monteiro, Luis, 3810-474 Aveiro (PT)

(56) Entgegenhaltungen:
- EP-A2- 1 154 202
- DE-A1- 2 323 927
- DE-A1-102010 055 567
- DE-U1-202005 003 642

## Beschreibung

Die Erfindung betrifft einen Sensor zur Messung einer Ionisation einer Gasflamme gemäß Patentanspruch 1 und ein Verfahren zur Kalibrierung einer Anordnung zur Messung einer Ionisation einer Gasflamme einer Heizanlage gemäß Patentanspruch 7.

### Stand der Technik

Im Stand der Technik ist es bekannt, einen Sensor zur Messung einer Ionisation einer Gasflamme zu verwenden. Dazu weist der Sensor eine Elektrode auf. Die Elektrode befindet sich bei der Messung im Bereich der Gasflamme. Zur Messung wird eine Spannung zwischen der Gasdüse und der Elektrode angelegt und aufgrund des fließenden Stromes die Ionisation der Gasflamme und damit die Qualität der Verbrennung beurteilt.

DE 20 2005 003 642 U1 beschreibt einen Laborgasbrenner mit einem Brennerkopf, dem über eine Brenngaszuleitung ein brennbares Gasgemisch zuführbar ist, mit Leitfähigkeits-Messmitteln zur Erfassung einer elektrischen Leitfähigkeit im Bereich des Brennerkopfs, umfassend eine mit einer elektrischen Messspannung beaufschlagbare Elektrode und eine Gegenelektrode, mit Auswertemitteln zur Auswertung der erfassten Leitfähigkeit zur Feststellung einer Störung und zur Feststellung einer Flammenbildung am Brennerkopf, mit Steuermitteln zum Ansteuern von Funktionen des Laborgasbrenners und zum Überführen der Funktionen in einen Störmodus in Abhängigkeit von der Feststellung einer Störung durch die Auswertemittel. Die Messspannung weist eine elektrische Wechselspannung mit einem ersten und einem zweiten Halbwellenverlauf auf und die Auswertemittel sind ausgebildet, um während des ersten Halbwellenverlaufs und während des zweiten Halbwellenverlaufs den Stromfluss zwischen der Elektrode und der Gegenelektrode zu messen und als Hinweis auf eine Störung zu bewerten.

### Offenbarung der Erfindung

Die Aufgabe der Erfindung besteht darin, einen verbesserten Sensor zur Messung einer Ionisation einer Gasflamme und ein verbessertes Verfahren zur Kalibrierung eines Sensors bereitzustellen.

Die Aufgabe der Erfindung wird durch den Sensor gemäß Patentanspruch 1 und durch das Verfahren gemäß Patentanspruch 7 gelöst.

Weitere vorteilhafte Ausführungsformen sind in den abhängigen Ansprüchen angegeben.

Ein Vorteil des beschriebenen Sensors besteht darin, dass der Abstand zwischen den zwei Elektroden des Sensors präzise festgelegt ist. Dies wird dadurch erreicht, dass die zwei Elektroden an einem Gehäuse des Sensors angeordnet sind. Ein weiterer Vorteil des Sensors besteht darin, dass eine Spannungsquelle vorgesehen ist, mit der eine Spannung erzeugt werden kann, bei der auch ohne Gasflamme eine Ionisation der Luft stattfindet. Somit kann eine Kalibrierung des Sensors auch ohne Gasflamme, d.h. ohne Betrieb der Heizanlage durchgeführt werden.

Somit ist es nicht erforderlich, den Sensor während des Betriebes der Heizanlage zu kalibrieren. Damit kann Brennstoff eingespart werden. Zudem kann die Kalibrierung automatisch erfolgen.

In einer Ausführungsform ist die Messschaltung ausgebildet ist, um abhängig von einem Teststrom einen Vergleichswert für eine Messempfindlichkeit der Elektroden ohne Gasflamme zu ermitteln. Der Vergleichswert wird bei der Messung der Ionisation der Gasflamme berücksichtigt. Somit kann auf einfache Weise eine Alterung der Elektroden bei der Messung der Ionisation berücksichtigt werden.

In einer weiteren Ausführungsform sind verschiedene Kennlinien für eine Zuordnung eines Messstromes zu einem Wert für die Ionisation des Gases der Gasflamme in der Messschaltung abgelegt, wobei die Messschaltung ausgebildet ist, um abhängig von einem Teststromwert eine der Kennlinien auszuwählen. Damit kann die Alterung der Elektroden auf einfache Weise berücksichtigt werden.

Das beschriebene Verfahren weist den Vorteil auf, dass eine Kalibrierung der Empfindlichkeit des Sensors unabhängig vom Betrieb der Heizanlage vorgenommen werden kann. Dies wird dadurch erreicht, dass während einer Testphase ohne Gasflamme eine Testspannung an die Elektroden des Sensors angelegt wird und ein Teststrom zwischen den Elektroden gemessen wird. Die Testspannung ist ausreichend hoch, um auch ohne das Vorhandensein einer Gasflamme eine Ionisation in der Luft zu erzeugen. Dazu werden Spannungen von beispielsweise 500 bis 50.000 Volt verwendet.

Nach Durchführung der Testphase wird abhängig von dem ermittelten Teststrom und abhängig von einem Messstrom, der während des Vorhandenseins einer Gasflamme gemessen wird, ein Wert für eine Ionisation der Gasflamme ermittelt.

In einer weiteren Ausführungsform wird nach Durchführung der Testphase und abhängig von dem ermittelten Teststrom eine Kennlinie für die Messempfindlichkeit der Elektroden ermittelt. Während des Messbetriebes wird abhängig vom Messstrom und abhängig von der Kennlinie von der Messschaltung ein Wert für die Ionisation der Gasflamme ermittelt.

Für die Durchführung eines einfachen Verfahrens sind verschiedene Kennlinien für vorgegebene Testströme bei vorgegebenen Testspannungen in der Messschaltung abgespeichert. Somit kann die Messschaltung abhängig von einem gemessenen Teststrom eine entsprechende Kennlinie für die Beurteilung der Empfindlichkeit der Elektroden bei der Messung der Ionisation verwenden. Beispielsweise legt eine Kennlinie in Abhängigkeit von einem Messstrom eine bestimmte Ionisation des brennenden Gases, insbesondere einen Lambdawert fest.

Die Erfindung wird im Folgenden anhand der Figuren näher erläutert. Es zeigen
- Figur 1: einen Sensor und eine Gasdüse; und
- Figur 2: ein Diagramm mit zwei Kennlinien.

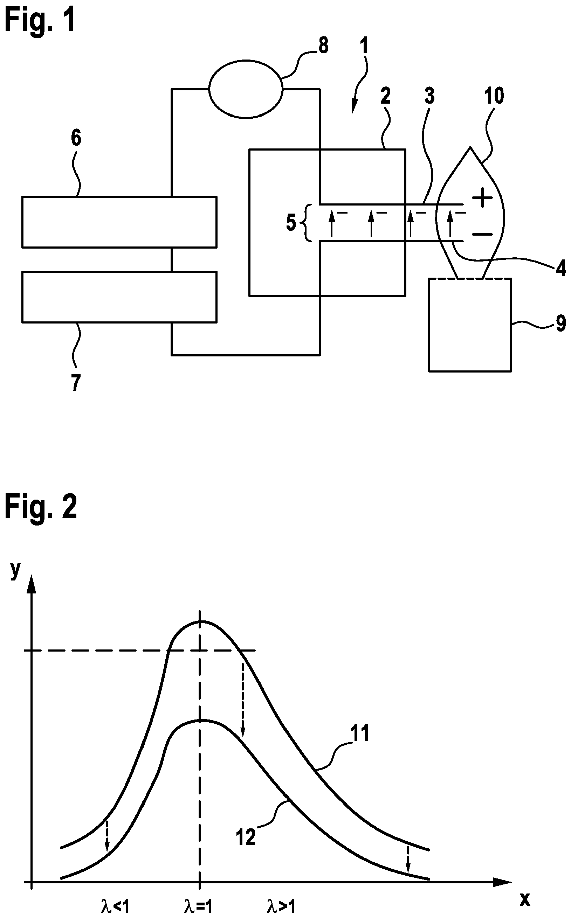

Figur 1 zeigt schematisch den Aufbau des Sensors 1. Der Sensor 1 weist ein Gehäuse 2 auf, in dem wenigstens eine erste Elektrode 3 und eine zweite Elektrode 4 vorgesehen sind. Durch die Anordnung in dem Gehäuse 2 weisen die erste und die zweite Elektrode 3, 4 einen definierten Abstand 5 voneinander auf. Zudem kann abhängig von der gewählten Ausführungsform der Sensor 1 eine Spannungsquelle 6 zur Erzeugung einer Hochspannung aufweisen. Die Spannungsquelle 6 kann in einer Testphase die zwei Elektroden 3, 4 mit einer entsprechend hohen Spannung erzeugen, sodass zwischen den Elektroden 3, 4 eine Ionisation der Luft stattfindet.

Weiterhin ist eine Messschaltung 7 vorgesehen. Zudem umfasst die Messschaltung 7 einen Strommesser 8. Mithilfe der Spannungsquelle 6 kann eine Spannung an die Elektroden 3, 4 angelegt werden. Mithilfe des Strommessers 8 wird sowohl während der Testphase als auch während der Messphase der zwischen den Elektroden 3, 4 fließende Strom gemessen und an die Messschaltung 7 weiter gemeldet. Die Messschaltung 7 ermittelt während einer Messphase einen Wert für die Ionisation der Gasflamme und während einer Testphase einen Vergleichswert für die Empfindlichkeit der Elektroden 3,4, der für eine Kalibrierung der Elektroden 3,4 während der Messphase verwendet wird.

Zudem ist in Figur 1 schematisch eine Düse 9 eines Brenners einer Heizanlage vorgesehen, die mit einer Gasquelle verbunden ist und zur Abgabe von Gas und zum Erzeugen einer Gasflamme 10 ausgebildet ist.

Während einer Testphase wird die Düse 9 nicht mit Gas versorgt, sodass keine Gasflamme 10 erzeugt wird. Die Testphase ist unabhängig vom Betrieb der Heizanlage. Während der Testphase wird mithilfe der Spannungsquelle 6 eine Hochspannung an die Elektroden 3, 4 angelegt. Die Spannungsquelle 6 erzeugt während der Testphase eine Spannung, die beispielsweise im Bereich zwischen 500 Volt und 50.000 Volt liegen kann. Die Spannung ist entsprechend hoch, sodass ohne eine Gasflamme 10 eine messbare Ionisation der Atmosphäre stattfindet und der Strommesser 8 einen Teststrom messen kann. Während der Testphase wird mithilfe des Strommessers 8 der fließende Teststrom gemessen. Der gemessene Teststrom wird an die Messschaltung 7 weitergeleitet. Zudem wird vorzugsweise der Wert der Testspannung, die von der Spannungsquelle 6 während der Testphase an die Elektroden 3,4 angelegt wird, an die Messschaltung 7 übermittelt. Abhängig von der gewählten Ausführungsform kann die Messschaltung 7 auch die Spannungsquelle 6 und den Wert der Spannung steuern.

Zudem kann der Strommesser 8 einen zeitlichen Anstieg des Teststromes und einen maximalen Teststrom erfassen und an die Messschaltung 7 weiter leiten. Weiterhin kann die Spannungsquelle 6 verschiedene Testspannungen während der Testphase an den Elektroden 3,4 anlegen. Beispielsweise kann ein vorgegebener Testspannungsverlauf mit beispielsweise steigender und/oder fallender Werte von der Spannungsquelle während der Testphase an die Elektroden angelegt werden. Beispielsweise kann während der Testphase die Testspannung in der Höhe variiert werden, sodass nicht nur ein einzelner Teststromwert, sondern mehrere Teststromwerte für verschiedene Teststromspannungen erfasst werden können. Der Teststrom und/oder die zeitliche Zunahme des Teststromes und/oder ein maximaler Wert für den Teststrom und/oder die entsprechenden Spannungen der Spannungsquelle können von der Messschaltung 7 verwendet werden, um einen Vergleichswert, insbesondere eine Kennlinie zur Kalibrierung der Messempfindlichkeit der Elektroden während der Messphase festzulegen.

Während einer Messphase wird beispielsweise mithilfe der Spannungsquelle 6 oder mithilfe der weiteren Spannungsquelle eine Messspannung zwischen den Elektroden 3,4 erzeugt. Die Messspannung ist niedriger als die Testspannung. Die Messspannung liegt beispielsweise im Bereich zwischen 5 und 100 Volt. Zudem wird während der Messphase von der Düse 9 eine Gasflamme 10 erzeugt und gleichzeitig mithilfe des Strommessers 8 ein Messstrom erfasst und an die Messschaltung 7 übermittelt. Die Messschaltung 7 ermittelt abhängig von dem gemessenen Messstrom und dem gemessenen Teststrom beziehungsweise abhängig von dem ermittelten Vergleichswert und/oder der ermittelten Kennlinie einen Wert für die Ionisation der Gasflamme, insbesondere einem λ-Wert der Gasflamme. Der Wert für die Ionisation wird von der Messschaltung 7 ausgegeben und kann beispielsweise für eine Diagnose der Qualität der Verbrennung und/oder für eine Steuerung der Verbrennung, insbesondere für eine Steuerung des Mischungsverhältnisses von Luft und Gas verwendet werden.

Figur 2 zeigt in einer schematischen Darstellung ein Diagramm für zwei Kennlinien 11, 12 des Sensors 1 während einer Messung der Ionisation einer Gasflamme. Entlang der y-Achse sind Stromwerte Mikroampere (µA) und entlang der x-Achse sind Lambdawerte für die Gasflamme aufgetragen. Ein Lambdawert kleiner 1 bedeutet ein Luftmangel bei der Verbrennung. Ein Lambdawert größer 1 bedeutet ein Luftüberschuss. Die Kennlinien legen eine Abhängigkeit zwischen einem Strom, der zwischen den Elektroden 3, 4 fließt, und einer Ionisation der Gasflamme, beispielsweise einen Lambdawert, fest. Die erste Kennlinie 11 entspricht dabei neuen Elektroden 3, 4. Während des Betriebes des Sensors 1 sind die Elektroden 3, 4 einer Alterung unterworfen. Die Alterung kann beispielsweise durch eine Verschmutzung der Elektroden und/oder durch eine Beschädigung der Elektroden beeinflusst werden. Somit verändert sich die Empfindlichkeit der Elektroden von der ersten Kennlinie 11 mit zunehmender Betriebszeit in Richtung der zweiten Kennlinie 12. Die zweite Kennlinie 12 entspricht einem Sensor 1 am Ende der Lebensdauer.

Die Kennlinien können in einem Speicher der Messschaltung abgelegt sein. Sind vorgegebene Kennlinien abgespeichert, so können die abgespeicherten Kennlinien verschiedenen Testströmen oder Vergleichswerten zugeordnet sein. Somit kann die Messschaltung abhängig von dem gemessenen Teststrom und/oder abhängig vom ermittelten Vergleichswert eine der abgespeicherten Kennlinien auswählen, um anhand des gemessenen Messstromes einen Wert für die Ionisation der Gasflamme ermitteln zu können. Somit kann während der Messphase abhängig vom gemessenen Messstrom eine präzise Aussage über die Ionisation der Gase in der Gasflamme getroffen werden.

In einer weiteren Ausführungsform wird eine Kennlinie abhängig von den Testströmen, die während der Testphase erfasst werden, ermittelt. Dazu sind entsprechende Verfahren und Berechnungsmethoden in der Messschaltung 7 abgespeichert.

Zudem können Berechnungsformeln im Speicher der Messschaltung abgelegt sein, mit denen abhängig von einem gemessenen Teststrom bei einer festgelegten Testspannung und abhängig von einem bestimmten Messstrom während der Messphase ein entsprechender Wert für Ionisation der Gasflamme, insbesondere einen λ-Wert berechnet werden kann.

Der beschriebene Sensor und das beschriebene Verfahren kann insbesondere bei Heizanlagen für Warmwasser eingesetzt werden, um niedrige NOx-Werte bei der Verbrennung einstellen zu können. Besonders bei Warmwasserheizungen ist es von Vorteil, wenn die Kalibrierung des Sensors automatisch ohne die Ausführung von Testverbrennungen durchgeführt werden kann.

## Patentansprüche

1. Sensor (1) zur Messung einer Ionisation einer Gasflamme (10),
- wobei zwei Elektroden (3, 4) vorgesehen sind, wobei die zwei Elektroden (3, 4) an einem Gehäuse (2) des Sensors (1) angeordnet sind,
- wobei die Elektroden (3, 4) mit einer Spannungsquelle (6) verbunden sind,
- wobei die Spannungsquelle (6) ausgebildet ist, um eine Spannung zu erzeugen, bei der eine Ionisation ohne Gasflamme (10) erzeugt wird,
- wobei die Elektroden (3, 4) mit einer Messschaltung (7) verbunden sind,
- wobei die Messschaltung (7) einen Strommesser (8) aufweist,
- wobei der Strommesser (8) ausgebildet ist, um einen Strom zwischen den Elektroden (3, 4) zu messen,
- wobei die Spannungsquelle (6) ausgebildet ist, während einer Testphase eine Testspannung und während einer Messphase eine niedrigere als die Testspannung ausgebildete Messspannung an den Elektroden (3, 4) des Sensors (1) anzulegen,
- wobei der Strommesser (8) ausgebildet ist, einen Teststrom zwischen den Elektroden (3,4) während der Testphase zu messen und der Messschaltung (7) weiterzuleiten,
- wobei während der Messphase während einer Verbrennung mit einer Gasflamme (10) der Sensor (1) in der Gasflamme (10) angeordnet ist,
- wobei der Strommesser (8) ausgebildet ist, einen Messstrom zwischen den Elektroden (3,4) während der Messphase zu erfassen und der Messschaltung (7) weiterzuleiten,
- wobei die Messschaltung (7) ausgebildet ist, abhängig von dem gemessenen Messstrom und dem gemessenen Teststrom einen Wert für die Ionisation der Gasflamme (10) zu ermitteln,
- wobei die Messschaltung (7) ausgebildet ist, den Wert für die Ionisation auszugeben.

2. Sensor (1) nach Anspruch 1, wobei die Messschaltung (7) ausgebildet ist, um während der Testphase aus dem gemessenen Teststromwert einen Vergleichswert für eine Messempfindlichkeit der Elektroden (3, 4) zu ermitteln.

3. Sensor (1) nach Anspruch 2, wobei die Messschaltung (7) ausgebildet ist, um während der Messphase den Messstrom während der Verbrennung mit der Gasflamme (10) zu messen, wobei die Messschaltung (7) ausgebildet ist, um abhängig vom Messstrom und unter Berücksichtigung des Vergleichswertes einen Wert für die Ionisation der Gasflamme (10) zu ermitteln.

4. Sensor (1) nach Anspruch 3, wobei verschiedene Kennlinien für eine Zuordnung eines Messstromes zu einem Wert für die Ionisation des Gases der Gasflamme in der Messschaltung abgelegt sind, wobei die Messschaltung ausgebildet ist, um abhängig von einem Teststromwert eine der Kennlinien auszuwählen.

5. Sensor (1) nach einem der Ansprüche 2 bis 4, wobei die Messschaltung (7) ausgebildet ist, um abhängig von einem zeitlichen Verhalten des Teststromes und/oder einem maximalen Wert des Teststromes den Vergleichswert zu ermitteln.

6. Sensor (1) nach einem derAnsprüche 2 bis 5, wobei die Messschaltung (7) ausgebildet ist, um abhängig von der Testspannung den Vergleichswert zu ermitteln.

7. Verfahren zum Messen einer Ionisation einer Gasflamme (10), mit einem Sensor (1) mit zwei Elektroden (3, 4), wobei während einer Testphase ohne Gasflamme (10) eine Testspannung an die Elektroden (3, 4) des Sensors (1) angelegt wird, und ein Teststrom zwischen den Elektroden (3, 4) gemessen wird, wobei während einer Messphase während einer Verbrennung der Sensor (1) in der Gasflamme (10) angeordnet ist und eine Messspannung an die Elektroden (3, 4) des Sensors (1) angelegt wird und ein Messstrom gemessen wird, und wobei abhängig vom Messstrom und abhängig vom Teststrom ein Wert für die Ionisation der Gasflamme (10) ermittelt wird.

8. Verfahren nach Anspruch 7, wobei abhängig vom gemessenen Teststrom wenigstens eine Kennlinie (11, 12) festgelegt wird, wobei die Kennlinie (11, 12) einen Zusammenhang zwischen dem Messstrom und einem Wert für eine Ionisation der Gasflamme (10) festlegt, und wobei abhängig von der Kennlinie (11, 12) und vom Messstrom ein Wert für die Ionisation der Gasflamme (10) ermittelt wird.

9. Verfahren nach Anspruch 8, wobei abhängig vom zeitlichen Verhalten und/oder von einem Maximalwert des Teststroms eine Kennlinie (11, 12) ermittelt wird.

10. Verfahren nach Anspruch 8 oder 9, wobei abhängig von der Testspannung eine Kennlinie (11, 12) ermittelt wird, und wobei die Kennlinie (11, 12) bei der Ermittlung der Ionisation berücksichtigt wird.

## Claims

1. Sensor (1) for measuring ionization of a gas flame (10),
- wherein two electrodes (3, 4) are provided, wherein the two electrodes (3, 4) are arranged on a housing (2) of the sensor (1),
- wherein the electrodes (3, 4) are connected to a voltage source (6),
- wherein the voltage source (6) is designed to generate a voltage at which ionization is generated without a gas flame (10),
- wherein the electrodes (3, 4) are connected to a measurement circuit (7),
- wherein the measurement circuit (7) has an ammeter (8),
- wherein the ammeter (8) is designed to measure a current between the electrodes (3, 4),
- wherein the voltage source (6) is designed to apply a test voltage during a test phase, and to apply a measurement voltage designed to be lower than the test voltage during a measurement phase, to the electrodes (3, 4) of the sensor (1),
- wherein the ammeter (8) is designed to measure a test current between the electrodes (3, 4) during the test phase and to relay it to the measurement circuit (7),
- wherein the sensor (1) is arranged in the gas flame (10) during combustion with a gas flame (10) during the measurement phase,
- wherein the ammeter (8) is designed to record a measurement current between the electrodes (3, 4) during the measurement phase and to relay it to the measurement circuit (7),
- wherein the measurement circuit (7) is designed to determine a value for the ionization of the gas flame (10) depending on the measured measurement current and the measured test current,
- wherein the measurement circuit (7) is designed to output the value for the ionization.

2. Sensor (1) according to Claim 1, wherein the measurement circuit (7) is designed to determine a comparison value for a measurement sensitivity of the electrodes (3, 4) from the measured test current value during the test phase.

3. Sensor (1) according to Claim 2, wherein the measurement circuit (7) is designed to measure the measurement current during the combustion with the gas flame (10) during the measurement phase, wherein the measurement circuit (7) is designed to determine a value for the ionization of the gas flame (10) depending on the measurement current and taking into account the comparison value.

4. Sensor (1) according to Claim 3, wherein different characteristic curves for an assignment of a measurement current to a value for the ionization of the gas of the gas flame are stored in the measurement circuit, wherein the measurement circuit is designed to select one of the characteristic curves depending on a test current value.

5. Sensor (1) according to one of Claims 2 to 4, wherein the measurement circuit (7) is designed to determine the comparison value depending on a temporal behaviour of the test current and/or a maximum value of the test current.

6. Sensor (1) according to one of Claims 2 to 5, wherein the measurement circuit (7) is designed to determine the comparison value depending on the test voltage.

7. Method for measuring ionization of a gas flame (10), using a sensor (1) having two electrodes (3, 4), wherein a test voltage is applied to the electrodes (3, 4) of the sensor (1) without a gas flame (10) during a test phase and a test current is measured between the electrodes (3, 4), wherein the sensor (1) is arranged in the gas flame (10) during combustion during a measurement phase and a measurement voltage is applied to the electrodes (3, 4) of the sensor (1) and a measurement current is measured, and wherein a value for the ionization of the gas flame (10) is determined depending on the measurement current and depending on the test current.

8. Method according to Claim 7, wherein at least one characteristic curve (11, 12) is defined depending on the measured test current, wherein the characteristic curve (11, 12) defines a relationship between the measurement current and a value for ionization of the gas flame (10), and wherein a value for the ionization of the gas flame (10) is determined depending on the characteristic curve (11, 12) and on the measurement current.

9. Method according to Claim 8, wherein a characteristic curve (11, 12) is determined depending on the temporal behaviour and/or on a maximum value of the test current.

10. Method according to Claim 8 or 9, wherein a characteristic curve (11, 12) is determined depending on the test voltage, and wherein the characteristic curve (11, 12) is taken into account in the determination of the ionization.

## Revendications

1. Capteur (1) destiné à mesurer une ionisation d'une flamme de gaz (10),
- deux électrodes (3, 4) étant présentes, les deux électrodes (3, 4) étant disposées sur un boîtier (2) du capteur (1),
- les électrodes (3, 4) étant reliées à une source de tension (6),
- la source de tension (6) étant configurée pour générer une tension à laquelle est générée une ionisation sans flamme de gaz (10),
- les électrodes (3, 4) étant reliées à un circuit de mesure (7),
- le circuit de mesure (7) possédant un ampèremètre (8),
- l'ampèremètre (8) étant configuré pour mesurer un courant entre les électrodes (3, 4),
- la source de tension (6) étant configurée pour appliquer aux électrodes (3, 4) du capteur (1) une tension de test pendant une phase de test et une tension de mesure configurée inférieure à la tension de test pendant une phase de mesure,
- l'ampèremètre (8) étant configuré pour mesurer un courant de test entre les électrodes (3, 4) pendant la phase de test et le transmettre au circuit de mesure (7),
- pendant la phase de mesure pendant une combustion avec une flamme de gaz (10), le capteur (1) étant disposé dans la flamme de gaz (10),
- l'ampèremètre (8) étant configuré pour détecter un courant de mesure entre les électrodes (3, 4) pendant la phase de mesure et le transmettre au circuit de mesure (7),
- le circuit de mesure (7) étant configuré pour déterminer une valeur pour l'ionisation de la flamme de gaz (10) en fonction du courant de mesure mesuré et du courant de test mesuré,
- le circuit de mesure (7) étant configuré pour délivrer en sortie la valeur pour l'ionisation.

2. Capteur (1) selon la revendication 1, le circuit de mesure (7) étant configuré pour, pendant la phase de test, déterminer une valeur comparative pour une sensibilité de mesure des électrodes (3, 4) à partir de la valeur du courant de test mesurée.

3. Capteur (1) selon la revendication 2, le circuit de mesure (7) étant configuré pour, pendant la phase de mesure, mesurer le courant de mesure pendant la combustion avec la flamme de gaz (10), le circuit de mesure (7) étant configuré pour déterminer une valeur pour l'ionisation de la flamme de gaz (10) en fonction du courant de mesure et en tenant compte de la valeur comparative.

4. Capteur (1) selon la revendication 3, différentes courbes caractéristiques pour une affectation d'un courant de mesure à une valeur pour l'ionisation du gaz de la flamme de gaz étant stockées dans le circuit de mesure, le circuit de mesure étant configuré pour sélectionner l'une des courbes caractéristiques en fonction d'une valeur de courant de test.

5. Capteur (1) selon l'une des revendications 2 à 4, le circuit de mesure (7) étant configuré pour déterminer la valeur comparative en fonction d'un comportement dans le temps du courant de test et/ou d'une valeur maximale du courant de test.

6. Capteur (1) selon l'une des revendications 2 à 5, le circuit de mesure (7) étant configuré pour déterminer la valeur comparative en fonction de la tension de test.

7. Procédé de mesure d'une ionisation d'une flamme de gaz (10) avec un capteur (1) comprenant deux électrodes (3, 4), une tension de test étant appliquée aux électrodes (3, 4) du capteur pendant une phase de test sans flamme de gaz (10), et un courant de test étant mesuré entre les électrodes (3, 4), pendant la phase de mesure, le capteur (1) étant disposé dans la flamme de gaz (10) pendant une combustion et une tension de mesure étant appliquée aux électrodes (3, 4) du capteur (1) et un courant de mesure étant mesuré, et une valeur pour l'ionisation de la flamme de gaz (10) étant déterminée en fonction du courant de mesure et en fonction du courant de test.

8. Procédé selon la revendication 7, au moins une courbe caractéristique (11, 12) étant spécifiée en fonction du courant de test mesuré, la courbe caractéristique (11, 12) spécifiant une relation entre le courant de mesure et une valeur pour une ionisation de la flamme de gaz (10), et une valeur pour l'ionisation de la flamme de gaz (10) étant déterminée en fonction de la courbe caractéristique (11, 12) et du courant de mesure.

9. Procédé selon la revendication 8, une courbe caractéristique (11, 12) étant déterminée en fonction du comportement dans le temps et/ou d'une valeur maximale du courant de test.

10. Procédé selon la revendication 8 ou 9, une courbe caractéristique (11, 12) étant déterminée en fonction de la tension de test et la courbe caractéristique (11, 12) étant prise en compte lors de la détermination de l'ionisation.
